# FASCICULE DE BREVET EUROPEEN

(11) **EP 3 516 756 B1**
(45) Date de publication et mention de la délivrance du brevet: **03.11.2021**
(21) Numéro de dépôt: 17739293.3
(22) Date de dépôt: 19.07.2017
(51) Int. Cl.: H02K 7/08, H02K 5/173, H02K 1/30, H02K 11/215, H02K 1/27

(54) **MOTEUR ELECTRIQUE A COURANT CONTINU SANS BALAIS POUR SYSTEME D'ESSUYAGE DE VEHICULE AUTOMOBILE**
BÜRSTENLOSER GLEICHSTROMELEKTROMOTOR FÜR EINE WISCHERANLAGE EINES KRAFTFAHRZEUGS
BRUSHLESS DC MOTOR FOR A WIPING SYSTEM OF A MOTOR VEHICLE

(30) Priorité: 26.09.2016 FR 1659036
(43) Date de publication de la demande: 31.07.2019
(73) Titulaire: Valeo Systèmes d'Essuyage, 78322 Le Mesnil Saint Denis (FR)
(72) Inventeur: HERRADA, Jose-Luis, 78322 Le Mesnil-Saint-Denis (FR)
(74) Mandataire: Valeo Visibility
(86) Numéro de dépôt international: PCT/EP2017/068196
(87) Numéro de publication internationale: WO 2018/054573

(56) Documents cités:
- WO-A1-97/18120
- DE-A1- 19 831 739
- DE-A1-102008 054 507
- DE-A1-102011 079 527
- DE-A1-102015 201 158

## Description

La présente invention concerne un moto-réducteur pour système d'essuyage de véhicule automobile, ainsi qu'un système d'essuyage comprenant un tel moto-réducteur.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

Cependant, la commande des moteurs électriques est plus complexe par rapport aux moteurs électriques à balais car pour permettre un bon fonctionnement, il est nécessaire de connaître précisément la position angulaire du rotor du moteur électrique à courant continu sans balais (« Brushless » en anglais).

En effet, de tels moteurs électriques comprennent des bobines d'excitation électromagnétique disposées au niveau du stator et alimentées alternativement via un onduleur pour permettre l'entraînement du rotor.

Or, afin de pouvoir commuter les interrupteurs de l'onduleur (en général six commutations avec chaque tour du rotor) et donc l'alimentation des bobines électromagnétiques à des instants optimaux pour permettre d'obtenir l'entraînement désiré du rotor, il convient de connaître à chaque instant la position du rotor. A cet effet, la position du rotor et sa vitesse angulaire sont bien souvent déterminées par l'exploitation des signaux générés par un dispositif qui comprend un aimant multipolaire, monté tournant avec le rotor, et des capteurs à effet Hall agencés en des positions fixes par rapport à l'aimant.

Le document WO 2016/010023 divulgue un tel un moto-réducteur pour système d'essuyage de véhicule automobile utilisant un moteur à courant continu sans balais. Le moteur sans balais comporte un stator présentant des bobines d'excitation électromagnétique du rotor, et le rotor est monté rigidement à l'extrémité d'un arbre de rotation. Cet arbre de rotation s'étend depuis un partie de carter pour l'ensemble rotor/stator et jusqu'à une partie du carter recevant le mécanisme de réduction qui est un engrenage à vis sans fin.

La vis de l'engrenage est solidaire de l'arbre de rotation du rotor et engrène avec la roue dentée solidaire de l'arbre de sortie du moto-réducteur.

De manière notable et comme visible à la figure 4 (ou à la figure 8) du document WO 2016/010023, on utilise seulement deux roulements à billes pour guider en rotation l'arbre de rotation du rotor, avec, d'une part, un premier roulement à billes, repéré 39 supportant une partie centrale de l'arbre de rotation, intermédiaire entre le rotor et la vis sans fin, et d'autre part, un deuxième roulement à l'extrémité longitudinale de l'arbre disposée de l'autre côté de la vis sans fin par rapport au premier roulement.

En particulier, la partie de longueur de l'arbre de rotation s'étendant depuis le premier roulement vers le rotor est guidée seulement par le premier roulement, l'extrémité longitudinale de l'arbre ressortant de l'autre côté du rotor étant libre de guidage.

Un tel guidage au moyen de deux roulements uniquement diffère de la pratique usuelle qui utilise classiquement un troisième roulement pour guider en rotation l'extrémité distale de l'arbre à proximité du rotor. Selon les constatations de l'inventeur, un tel guidage de l'arbre utilisant uniquement deux roulements permet de limiter l'encombrement du moto- réducteur suivant la direction de l'arbre. En revanche, l'omission du troisième roulement n'est pas idéale en termes d'efforts mécaniques, ce défaut pouvant être à l'origine de l'apparition de vibrations lors de la mise en rotation du rotor.

Plus encore, dans l'état de la technique connu, que le guidage de l'arbre soit à deux roulements ou à trois roulements comme précédemment cité, il est d'usage de toujours prévoir un roulement en une position intermédiaire sur la longueur de l'arbre de rotation, à proximité de la vis sans fin et un autre roulement sur l'extrémité longitudinale de l'arbre de l'autre côté de la vis sans fin. Un tel guidage par le positionnement de roulement au plus près de la vis sans fin permet de limiter le fléchissement de l'arbre de rotation au niveau de cette partie engrenante, et dans le but d'assurer un fonctionnement satisfaisant du mécanisme réducteur, sans risque de ripage de l'engrenage.

Dans le document WO 2016/010023, le roulement intermédiaire repéré 39 est disposé à proximité de l'aimant multipolaire du dispositif assurant la détermination de la position du rotor. Limiter le fléchissement de l'arbre, permet encore de maintenir dans des tolérances admises, l'écart radial entre l'aimant multipolaire et chaque capteur à effet Hall, de manière à assurer le bon fonctionnement du dispositif de capteur.

Par ailleurs, les documents DE 10 2008 054507 A1, DE 10 2011 079527 A1, DE 198 31 739 A1, WO 97/18120 A1 et E 10 2015 201158 A1 illustrent l'état de la technique qui constitue l'arrière -plan de la revendication 1.

La présente invention a pour but de pallier les inconvénients précités en proposant un moto-réducteur pour système d'essuyage de véhicule automobile dont le guidage de l'arbre du moteur permet d'obtenir une bonne compacité selon l'axe longitudinal de l'arbre de rotation, et sans sacrifier l'équilibrage dynamique du moteur électrique.

D'autres buts et avantages de l'invention apparaitront au cours de la description qui va suivre qui n'est donnée qu'à titre indicatif et qui n'a pas pour but de la limiter.
Aussi l'invention concerne un moto-réducteur pour système d'essuyage de véhicule automobile comprenant :
- un moteur électrique à courant continu sans balais comportant :
   - un rotor, comprenant des éléments magnétiques,
   - un stator présentant des bobines d'excitation électromagnétique du rotor,
   - un arbre de rotation solidaire du rotor,
- un mécanisme réducteur reliant l'arbre de rotation et un arbre de sortie du moto-réducteur,
- un carter formant une enveloppe de protection pour le moteur électrique et ledit mécanisme réducteur
et dans lequel un roulement assure le guidage de l'arbre de rotation à l'une des extrémités longitudinales de l'arbre de rotation, ledit roulement disposé interne à l'ensemble rotor et stator, logé dans un évidement interne au rotor, et dans lequel l'enveloppe du carter comprend une partie saillante vers l'intérieur, pénétrant ledit évidement interne, et supportant un siège pour ledit roulement.

Le carter comprend, d'une part, une partie d'enveloppe, recevant au moins le rotor et le stator du moteur électrique, présentant une ouverture latérale au moteur électrique, et d'autre part, un flasque de fermeture assurant la fermeture de manière amovible de ladite ouverture latérale , et dans lequel ladite partie saillante du carter est portée par le flasque de fermeture.

La partie saillante comprend une paroi tubulaire, s'étendant coaxialement à l'arbre de rotation, le siège pour le roulement étant formé à l'extrémité distale de la partie saillante par un logement pour le roulement défini par la surface cylindrique interne de la paroi tubulaire, et un épaulement s'étendant radialement vers l'intérieure à partir de la surface cylindrique de la paroi tubulaire.

Selon des caractéristiques optionnelles de l'invention, pouvant être prises seules ou en combinaison:
- la paroi formant épaulement se prolonge pour obturer totalement le creux de la partie saillante ;
- la paroi de l'épaulement se prolongeant pour obturer totalement le creux de la partie saillante forme une cavité en sur-profondeur du logement pour le roulement, cette cavité recevant une partie de l'extrémité de l'arbre de rotation ressortant du roulement ;
- le flasque de fermeture comprend une paroi en forme de disque s'étendant latéralement à l'ensemble stator et rotor, présentant un rebord périphérique venant coopérer de manière étanche avec un bord complémentaire de ladite ouverture latérale, et dans lequel ladite partie saillante s'étend à partir de cette paroi en forme de disque vers l'intérieur de l'évidement interne ;
- la paroi en forme de disque et la partie saillante du flasque de fermeture sont constitués par un élément d'un seul tenant ;
- ledit élément d'un seul tenant est une pièce métallique moulée ;
- le moteur électrique comprend un support creux portant les éléments magnétiques du rotor , coaxial et solidaire en rotation de l'arbre de rotation, ledit support creux venant coiffer ladite partie saillante du carter ainsi que le roulement assurant le guidage de l'extrémité longitudinale de l'arbre de rotation du côté du moteur électrique en s'étendant axialement au-delà de l'extrémité longitudinale de l'arbre de rotation, coté moteur électrique ;
- le support creux comprend un manchon assurant la fixation du support creux sur l'arbre de rotation dans une position sur l'arbre intermédiaire entre le mécanisme réducteur et le roulement assurant le guidage de l'extrémité longitudinale de l'arbre de rotation du côté du moteur électrique ;
- le guidage en rotation de l'arbre de rotation est assurée uniquement par deux roulement agencés aux deux extrémités longitudinales de l'arbre de rotation, y compris ledit roulement porté par la partie saillante du côté du moteur électrique, et un autre roulement à l'autre extrémité longitudinale de l'arbre de rotation, côté mécanisme réducteur ;
- le mécanisme réducteur comprend un système vis sans fin /roue dentée, la vis sans fin étant solidaire de l'arbre de rotation du rotor, la roue dentée étant solidaire de l'arbre arbre de sortie du moto-réducteur.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie entraine le mécanisme d'embiellage.

L'invention sera mieux comprise à la lecture de la description suivante accompagnée des dessins en annexe, parmi lesquels :

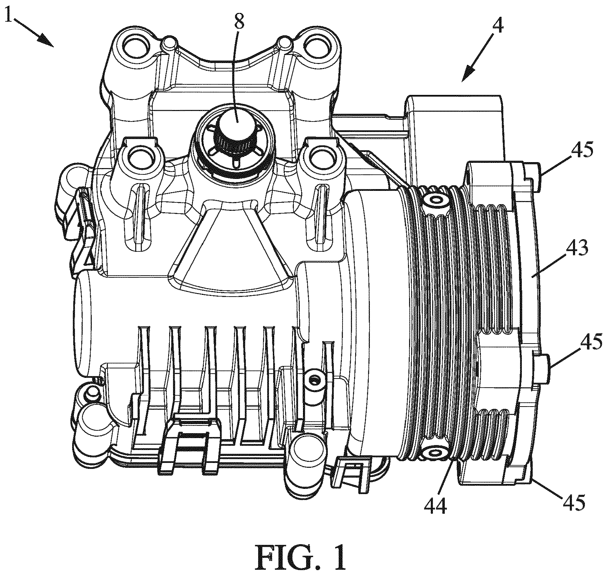

- La figure 1 est une vue en perspective d'un moto-réducteur conforme à l'invention selon un mode de réalisation,

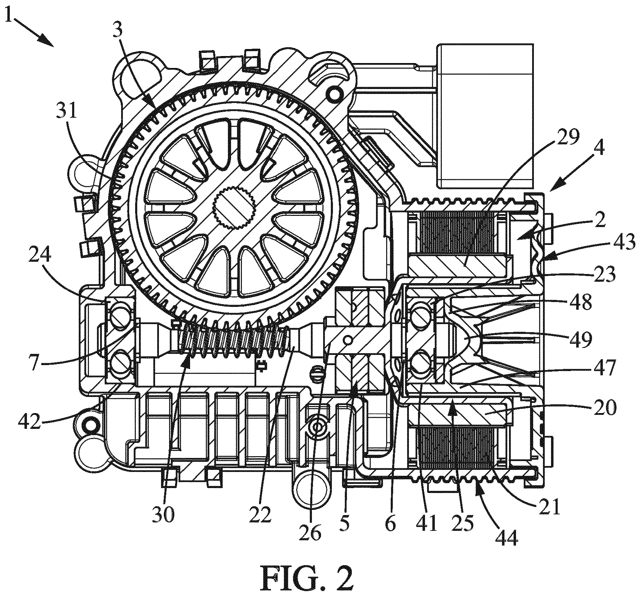

- La figure 2 est une vue de coupe selon un plan passant par l'axe de l'arbre de rotation du rotor du moteur électrique du moto-réducteur de la figure 1,

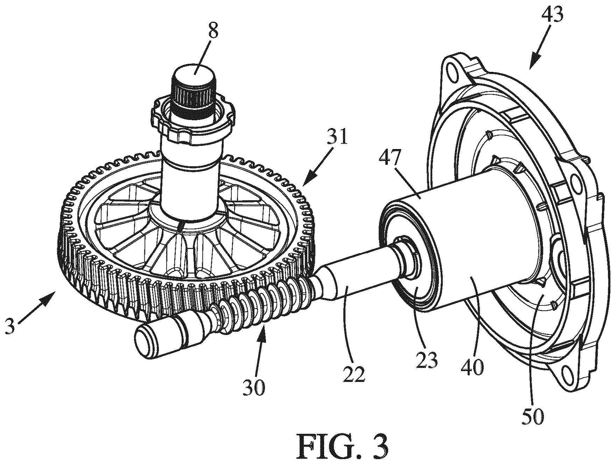

- La figure 3 est une vue partielle du moto-réducteur de la figure 1 illustrant en détail le flasque de fermeture, y compris la partie saillante du carter, l'arbre de rotation et le mécanisme réducteur,

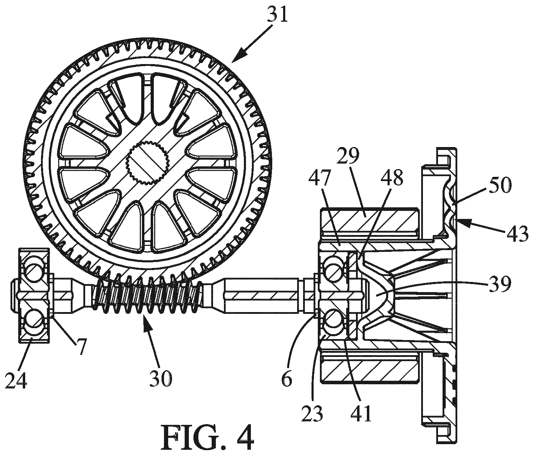

- La figure 4 est une vue partielle de la vue de la figure 2.

Aussi l'invention concerne un moto-réducteur 1 pour système d'essuyage de véhicule automobile comprenant :
- un moteur électrique 2 à courant continu sans balais comportant :
   - un rotor 20, présentant des éléments magnétiques 29, tels que des aimants permanents, répartis autour de l'axe du rotor, typiquement de polarités alternées
   - un stator 21 présentant des bobines d'excitation électromagnétique du rotor,
   - un arbre de rotation 22 solidaire du rotor,
- un mécanisme réducteur 3 reliant l'arbre de rotation 22 et un arbre de sortie 8 du moto-réducteur,
- un carter 4 formant une enveloppe de protection pour le moteur électrique 2 et ledit mécanisme réducteur 3.

Un tel moto-réducteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Selon un mode de réalisation, le dispositif de détermination de la position angulaire du rotor peut comprendre un aimant multipolaire 5 solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

Selon un mode de réalisation, le mécanisme réducteur 3 peut comprendre un système vis sans fin 30 /roue dentée 31, la vis sans fin étant solidaire de l'arbre de rotation 22 du rotor 20, la roue dentée 31 étant solidaire de l'arbre de sortie 8 du moto-réducteur. Cet arbre de sortie 8 est sensiblement perpendiculaire à l'arbre de rotation 22 du moteur électrique 2. Le filet de la vis sans fin 20 peut être obtenu à partir de la matière venant de l'arbre de rotation 22, typiquement en métal.

Un roulement 23 assure le guidage de l'arbre de rotation 22 à l'une des extrémités longitudinales de l'arbre de rotation, côté moteur électrique. De manière notable, ce roulement 23, est disposé interne à l'ensemble rotor 20 et stator 21, logé dans un évidement interne au rotor 20. Cette extrémité de l'arbre de rotation peut ainsi être avantageusement guidée par le roulement 23, sans nécessiter une longueur d'arbre telle que son extrémité ressorte au-delà du rotor. D'autre part, le montage de ce roulement 23 interne au rotor, ne nécessite pas de disposer d'une portée sur la section de longueur utile de l'arbre de rotation extérieur au rotor, et qui est déjà utilisée pour supporter la vis sans fin et/ou pour supporter l'aimant multipolaire 5 : cette section de longueur de l'arbre externe au rotor peut être réduite au minimum, et dans l'objectif d'augmenter la compacité du moto-réducteur.

A cet effet, l'enveloppe du carter 4 comprend une partie saillante 40 vers l'intérieur, pénétrant ledit évidement interne au rotor 3, et supportant un siège 41 pour ledit roulement 23. La partie saillante 40 comprend une paroi tubulaire 47, s'étendant coaxialement à l'arbre de rotation 22, le siège 41 pour le roulement étant formé à l'extrémité distale de la partie saillante 40 par un logement pour le roulement 23. Ce logement 2. est défini par la surface cylindrique interne de la paroi tubulaire 47, et un épaulement 48 s'étendant radialement vers l'intérieure à partir de la surface cylindrique 17. Le roulement 23 comprenant une bague extérieure, une bague intérieure, et des éléments roulants, telles que des billes, le siège 41 du carter 4 peut être de diamètre ajusté à la bague extérieure du roulement 23. On remarque encore que la paroi formant épaulement 48 peut se prolonger pour obturer totalement le creux de la partie saillante, le cas échéant en formant une cavité 49 en sur-profondeur du logement pour le roulement 23 : cette cavité 49 en sur-profondeur est destinée à recevoir une partie de l'extrémité de l'arbre de rotation, ressortant légèrement du roulement 23. Un anneau élastique 6, reçu dans une gorge de l'arbre de rotation 22 peut permettre de bloquer la position du roulement 23 dans le siège 41 correspondant du carter 4.

Selon un mode réalisation, le carter 4 peut comprendre, d'une part, une partie 44 d'enveloppe, en particulier cylindrique, recevant au moins le rotor 20 et le stator 21 du moteur électrique 2, présentant une ouverture latérale au moteur électrique 2, et d'autre part, un flasque de fermeture 43 assurant la fermeture de manière amovible de ladite ouverture latérale. Selon un mode de réalisation, ladite partie saillante 40 du carter 4 est portée par le flasque de fermeture 43.

La partie d'enveloppe 44 peut être un socle, notamment en métal, présentant des ailettes 76 destinées à faciliter l'évacuation de la chaleur.

Lorsque le flasque de fermeture 43 est retiré, l'ouverture latérale autorise le retrait des composants du moteur électrique, tels que le rotor 20, le stator 21, l'arbre de rotation 22 notamment. Ce flasque de fermeture 43 peut comprendre une paroi en forme de disque 50 s'étendant latéralement à l'ensemble stator et rotor, et présentant un rebord périphérique venant coopérer de manière étanche avec un bord complémentaire de ladite ouverture latérale. Ladite partie saillante 40 s'étend à partir de cette paroi en forme de disque vers l'intérieur de l'évidement interne. Cette paroi en forme de disque et la partie saillante 40 du flasque de fermeture 43 peuvent être constitués par un élément d'un seul tenant, notamment métallique.

Le maintien du flasque de fermeture 43 contre la partie 44 peut être obtenu par l'intermédiaire d'organes de fixation 45 traversant des oreilles du flasque de fermeture 43, typiquement vissé dans des alésages taraudés de la partie d'enveloppe 44.

Le moteur électrique 2 peut comprendre un support creux 25 portant les éléments magnétiques 29 du rotor 20 (aimants permanents et/ou bobines), coaxial et solidaire en rotation de l'arbre de rotation 22, ledit support creux 25 venant coiffer ladite partie saillante 40 du carter 4, ainsi que le roulement 23 assurant le guidage de l'extrémité longitudinale de l'arbre de rotation 20 du côté du moteur électrique 2. Ce support creux 25 peut encore s'étendre axialement au-delà de l'extrémité longitudinale de l'arbre de rotation 22, coté moteur électrique.

Le support creux 25 est un corps de révolution qui comprend une partie creuse, tubulaire, de diamètre interne permettant d'y loger intérieurement le roulement 23 et la partie saillante 40 du carter 4, et sur la circonférence extérieure de laquelle sont solidarisés les éléments magnétique du rotor. Ce support creux 25 peut comprendre encore un manchon 26 permettant la fixation du support creux 25 sur l'arbre de rotation 22. Ce manchon 26 vient se fixer dans une position sur l'arbre de rotation 22 intermédiaire entre le mécanisme réducteur 3 et le roulement 23. Le diamètre intérieur du manchon 26 peut être ajusté à l'arbre de rotation en cette position intermédiaire. Il peut s'agir d'un ajustement serré permettant un assemblage par frettage entre le support creux 25 et ledit arbre de rotation 22.

On remarque que l'aimant multipolaire 5 peut prendre la forme d'une ou plusieurs bagues montées autour de l'arbre de rotation. Les domaines magnétiques (nord/sud) s'étendent en alternance suivant la circonférence de la bague. Cet aimant multipolaire 5 peut être solidaire dudit support creux 25, agencé autour dudit manchon 26 de fixation dudit support creux 25.

Selon un mode de réalisation, le guidage en rotation de l'arbre de rotation 22 est assuré uniquement par deux roulement 23, 24 agencés aux deux extrémités longitudinales de l'arbre de rotation 22, à savoir , d'une part, ledit roulement 23, du côté du moteur électrique, porté par le siège 41 de la partie saillante 40 et d'autre part, un autre roulement 24 à l'autre extrémité longitudinale de l'arbre de rotation 22, côté mécanisme réducteur 3.

Chaque roulement 23 ou 24 comprend une bague extérieure, une bague intérieure, et des éléments roulants, telles que des billes. Pour chaque extrémité longitudinale de l'arbre de rotation, la bague intérieure du roulement 23 (ou 24) correspondant peut être de diamètre interne ajusté au diamètre externe de l'arbre au niveau de l'extrémité longitudinale correspondante.

Un second siège 42, de diamètre ajusté à la bague extérieure reçoit le roulement 24 assurant le guidage de l'autre extrémité longitudinale de l'arbre de rotation 22, coté mécanisme réducteur. Le blocage de la position axiale de l'un et/ou l'autre des deux roulements 23, 24 sur l'arbre de rotation 22 peut être assuré grâce à un anneau élastique 6, 7 reçu dans une gorge de l'arbre de rotation 22.

L'anneau élastique 6, dit premier anneau élastique, est reçu dans une première gorge de l'arbre de rotation 22 peut permettre de bloquer la position du roulement 23 dans le siège 41 correspond du carter 4. Un second anneau élastique 7 reçu dans une gorge de l'arbre de rotation 22 bloque la position axiale de l'autre roulement 24 dans l'autre siège 42 du carter 4. Les deux anneaux élastiques 6 et 7 peuvent respectivement engager en butée avec les deux roulements 23 et 24, coté intérieur, afin d'interdire leur rapprochement sur l'arbre de rotation 22.

On remarque que le diamètre de l'arbre de rotation 22 au niveau des extrémités longitudinales supportées par les deux roulements 23, 24 peut être supérieur au diamètre de l'arbre au niveau de la vis sans fin 30. Il est ainsi possible d'augmenter la résistance à la flexion de l'arbre de rotation 22, par une augmentation moyenne du diamètre de l'arbre de rotation. On obtient toujours un fonctionnement satisfaisant du mécanisme réducteur, en particulier sans risque de ripage entre la vis 30 et la roue 31 de l'engrenage du mécanisme réducteur, et alors que le guidage de l'arbre de rotation est dépourvu de palier de guidage sur une portion centrale de l'arbre.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie 8 entraine le mécanisme d'embiellage.

Dans un tel système, le mouvement de rotation continu de l'arbre de sortie 8 est transformé par le mécanisme d'embiellage en un mouvement de va-et-vient du ou des balais d'essuyage.

### NOMENCLATURE

1. Moto-réducteur,
2. Moteur électrique,
20. Rotor,
21. Stator,
22. Arbre de rotation,
23, 24. Roulements,
25. Support creux,
26. Manchon de fixation (support creux),
29. Eléments magnétiques
3. Mécanisme réducteur,
30. vis sans fin,
31. Roue dentée,
4. Carter,
40. Partie saillante,
41. 42 Sièges (roulements),
43. Flasque de fermeture,
44. Partie d'enveloppe (Socle),
45. Organe de fixation (vis),
46. Ailettes (socle),
47. Paroi tubulaire (partie saillante 40),
48. Epaulement,
49. Cavité en sur-profondeur,
50. Paroi en forme de disque
5. Aimant multipolaire,
6, 7. Anneaux élastiques,
8. Arbre de sortie (Moto-réducteur).

## Revendications

1. Moto-réducteur (1) pour système d'essuyage de véhicule automobile comprenant :
- un moteur électrique (2) à courant continu sans balais comportant :
- un rotor (20) comprenant des éléments magnétiques (29),
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie (8) du moto-réducteur,
- un carter (4) enveloppant le moteur électrique (2) et ledit mécanisme réducteur (3), le carter (4) comprenant, d'une part, un socle (44) recevant au moins le rotor (20) et le stator (21) du moteur électrique (2), présentant une ouverture latérale au moteur électrique, et d'autre part, un flasque de fermeture (43) assurant la fermeture de manière amovible de ladite ouverture latérale, et dans lequel un roulement (23) assure le guidage de l'arbre de rotation (22) à l'une des extrémités longitudinales de l'arbre de rotation, ledit roulement (23), disposé interne à l'ensemble rotor (20) et stator (21), logé dans un évidement interne au rotor (20), et dans lequel le carter (4) comprend une partie saillante (40) vers l'intérieur du carter portée par le flasque de fermeture (43), pénétrant ledit évidement interne, et supportant un siège (41) pour ledit roulement (23), ladite partie saillante (40) comprenant une paroi tubulaire (47) s'étendant coaxialement à l'arbre de rotation (22), le siège (41) pour le roulement étant formé à l'extrémité distale de la partie saillante (40) par un logement pour le roulement (23) défini par la surface cylindrique interne de la paroi tubulaire (47), un épaulement (48) s'étendant radialement vers l'intérieur à partir de la surface cylindrique de la paroi tubulaire (47).

2. Moto-réducteur selon la revendication 1, dans lequel la paroi formant épaulement (48) se prolonge pour obturer totalement le creux de la partie saillante (40).

3. Moto réducteur selon la revendication 2, dans lequel la paroi de l'épaulement (48) se prolongeant pour obturer totalement le creux de la partie saillante (40) forme une cavité (49) en sur-profondeur du logement pour le roulement (23), cette cavité recevant une partie de l'extrémité de l'arbre de rotation ressortant du roulement (23).

4. Moto-réducteur selon l'une des revendications précédentes, dans lequel le flasque de fermeture (43) comprend une paroi en forme de disque s'étendant latéralement à l'ensemble stator et rotor, présentant un rebord périphérique venant coopérer de manière étanche avec un bord complémentaire de ladite ouverture latérale, et dans lequel ladite partie saillante (40) s'étend à partir de cette paroi en forme de disque vers l'intérieur de l'évidement interne.

5. Moteur réducteur selon la revendication 4, dans lequel la paroi en forme de disque et la partie saillante (40) du flasque de fermeture (4) sont constitués par un élément d'un seul tenant.

6. Moto-réducteur selon la revendication 5, dans lequel ledit élément d'un seul tenant est une pièce métallique moulée.

7. Moto-réducteur selon l'une des revendications précédentes, dans lequel le moteur électrique (2) comprend un support creux (25) portant les éléments magnétiques du rotor (20), coaxial et solidaire en rotation de l'arbre de rotation (22), ledit support creux (25) venant coiffer ladite partie saillante (40) du carter ainsi que le roulement (23) assurant le guidage de l'extrémité longitudinale de l'arbre de rotation (20) du côté du moteur électrique (2) en s'étendant axialement au-delà de l'extrémité longitudinale de l'arbre de rotation (22), coté moteur électrique.

8. Moto-réducteur selon la revendication 7, dans lequel le support creux (25) comprend un manchon (26) assurant la fixation du support creux sur l'arbre de rotation (22) dans une position sur l'arbre intermédiaire entre le mécanisme réducteur (3) et le roulement (23) assurant le guidage de l'extrémité longitudinale de l'arbre de rotation (20) du côté du moteur électrique (2).

9. Moto-réducteur selon l'une des revendications précédentes, dans lequel le guidage en rotation de l'arbre de rotation (22) est assurée uniquement par deux roulement (23, 24) agencés aux deux extrémités longitudinales de l'arbre de rotation (22), y compris ledit roulement (23) porté par la partie saillante (40) du côté du moteur électrique, et un autre roulement (24) à l'autre extrémité longitudinale de l'arbre de rotation, côté mécanisme réducteur (3).

10. Moto-réducteur selon l'une des revendications précédentes, dans lequel le mécanisme réducteur comprend un système vis sans fin (30) /roue dentée (31), la vis sans fin étant solidaire de l'arbre de rotation du rotor, la roue dentée étant solidaire de l'arbre arbre de sortie (8) du moto-réducteur (1).

11. Système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'une quelconque des revendications précédentes dont l'arbre de sortie (8) entraine le mécanisme d'embiellage.

## Patentansprüche

1. Getriebemotor (1) für eine Wischeranlage eines Kraftfahrzeugs, welcher umfasst:
- einen bürstenlosen Gleichstromelektromotor (2), welcher aufweist:
- einen Rotor (20), der magnetische Elemente (29) umfasst;
- einen Stator (21), der Spulen zur elektromagnetischen Erregung des Rotors aufweist;
- eine Drehwelle (22), die mit dem Rotor fest verbunden ist,
- ein Untersetzungsgetriebe (3), das die Drehwelle (22) und eine Abtriebswelle (8) des Getriebemotors verbindet,
- ein Gehäuse (4), das den Elektromotor (2) und das Untersetzungsgetriebe (3) umgibt, wobei das Gehäuse (4) einerseits einen Sockel (44) umfasst, der wenigstens den Rotor (20) und den Stator (21) des Elektromotors (2) aufnimmt und eine seitliche Öffnung am Elektromotor aufweist, und andererseits einen Verschlussdeckel (43), der das lösbare Verschließen der seitlichen Öffnung sicherstellt, und wobei ein Wälzlager (23) die Führung der Drehwelle (22) an einem der Längsenden der Drehwelle sicherstellt, wobei das Wälzlager (23) im Inneren der aus dem Rotor (20) und dem Stator (21) bestehenden Einheit angeordnet und in einer inneren Aussparung des Rotors (20) aufgenommen ist, und wobei das Gehäuse (4) einen in Richtung des Inneren des Gehäuses vorstehenden Teil (40) umfasst, der von dem Verschlussdeckel (43) getragen wird, in die innere Aussparung hineinragt und einen Sitz (41) für das Wälzlager (23) trägt, wobei der vorstehende Teil (40) eine rohrförmige Wand (47) umfasst, die sich koaxial mit der Drehwelle (22) erstreckt, wobei der Sitz (41) für das Wälzlager am distalen Ende des vorstehenden Teils (40) von einer Aufnahme für das Wälzlager (23) gebildet wird, die durch die zylindrische Innenfläche der rohrförmigen Wand (47) definiert ist, wobei sich ein Ansatz (48) von der zylindrischen Fläche der rohrförmigen Wand (47) aus radial nach innen erstreckt.

2. Getriebemotor nach Anspruch 1, wobei sich die den Ansatz (48) bildende Wand verlängert, um den Hohlraum des vorstehenden Teils (40) vollständig zu verschließen.

3. Getriebemotor nach Anspruch 2, wobei die Wand des Ansatzes (48), die sich verlängert, um den Hohlraum des vorstehenden Teils (40) vollständig zu verschließen, eine Vertiefung (49) bildet, welche die Aufnahme für das Wälzlager (23) zusätzlich vertieft, wobei diese Vertiefung einen Teil des Endes der Drehwelle aufnimmt, das aus dem Wälzlager (23) herausragt.

4. Getriebemotor nach einem der vorhergehenden Ansprüche, wobei der Verschlussdeckel (43) eine scheibenförmige Wand umfasst, die sich seitlich von der aus Stator und Rotor bestehenden Einheit erstreckt und einen Umfangsrand aufweist, der mit einem komplementären Rand der seitlichen Öffnung dichtend zusammenwirkt, und wobei sich der vorstehende Teil (40) von dieser scheibenförmigen Wand aus in Richtung des Inneren der inneren Aussparung erstreckt.

5. Getriebemotor nach Anspruch 4, wobei die scheibenförmige Wand und der vorstehende Teil (40) des Verschlussdeckels (4) zusammen aus einem einstückigen Element bestehen.

6. Getriebemotor nach Anspruch 5, wobei das einstückige Element ein metallisches Formteil ist.

7. Getriebemotor nach einem der vorhergehenden Ansprüche, wobei der Elektromotor (2) einen hohlen Träger (25) umfasst, der die magnetischen Elemente des Rotors (20) trägt und mit Drehwelle (22) koaxial ist und drehfest verbunden ist, wobei der hohle Träger (25) den vorstehenden Teil (40) des Gehäuses sowie das Wälzlager (23) überdeckt, das die Führung des Längsendes der Drehwelle (20) auf der Seite des Elektromotors (2) sicherstellt, wobei er sich axial über das Längsende der Drehwelle (22) auf der Seite des Elektromotors hinaus erstreckt.

8. Getriebemotor nach Anspruch 7, wobei der hohle Träger (25) eine Hülse (26) umfasst, welche die Befestigung des hohlen Trägers auf der Drehwelle (22) in einer Position auf der Welle sicherstellt, die zwischen dem Untersetzungsgetriebe (3) und dem Wälzlager (23), das die Führung des Längsendes der Drehwelle (20) auf der Seite des Elektromotors (2) sicherstellt, liegt.

9. Getriebemotor nach einem der vorhergehenden Ansprüche, wobei die Drehführung der Drehwelle (22) ausschließlich durch zwei Wälzlager (23, 24) sichergestellt wird, die an den zwei Längsenden der Drehwelle (22) angeordnet sind, nämlich durch das Wälzlager (23), das von dem vorstehenden Teil (40) getragen wird, auf der Seite des Elektromotors und ein weiteres Wälzlager (24) am anderen Längsende der Drehwelle auf der Seite des Untersetzungsgetriebes (3).

10. Getriebemotor nach einem der vorhergehenden Ansprüche, wobei das Untersetzungsgetriebe ein System Schnecke (30)/Zahnrad (31) umfasst, wobei die Schnecke mit der Drehwelle des Rotors fest verbunden ist, wobei das Zahnrad mit der Abtriebswelle (8) des Getriebemotors (1) fest verbunden ist.

11. Wischeranlage eines Kraftfahrzeugs, welche ein oder mehrere Wischerblätter, einen Kurbeltrieb zum Antrieb des Wischerblattes oder der Wischerblätter für eine hin- und hergehende Bewegung sowie einen Getriebemotor nach einem der vorhergehenden Ansprüche, dessen Abtriebswelle (8) den Kurbeltrieb antreibt, umfasst.

## Claims

1. A gear motor (1) for a motor vehicle wiper system, comprising:
- a brushless direct-current electric motor (2) comprising:
- a rotor (20) comprising magnetic elements (29),
- a stator (21) having electromagnetic rotor excitation coils,
- a rotation shaft (22) secured to the rotor,
- a speed-reducing mechanism (3) linking the rotation shaft (22) and an output shaft (8) of the gear motor,
- a casing (4) enclosing the electric motor (2) and said speed-reducing mechanism (3), the casing (4) comprises, on the one hand, a jacket part (44) receiving at least the rotor (20) and the stator (21) of the electric motor (2), offering a lateral opening to the electric motor, and, on the other hand, a closing flange (43) ensuring the removable closure of said lateral opening,
and in which a rolling bearing (23) ensures the guiding of the rotation shaft (22) at one of the longitudinal ends of the rotation shaft, said rolling bearing (23), arranged internal to the rotor (20) and stator (21) assembly, housed in a recess internal to the rotor (20), and in which the casing (4) comprises an inwardly-protruding part (40) borne by the closing flange (43), penetrating into said internal recess, and supporting a seat (41) for said rolling bearing (23), the protruding part (40) comprises a tubular wall (47), extending coaxially to the rotation shaft (22), the seat (41) for the rolling bearing being formed at the distal end of the protruding part (40) by a housing for the rolling bearing (23) defined by the inner cylindrical surface of the tubular wall (47), and a shoulder (48) extending radially inward from the cylindrical surface of the tubular wall (47).

2. The gear motor as claimed in claim 1, wherein the shoulder-forming wall (48) is extended to totally block the hollow of the protruding part (40).

3. The gear motor as claimed in claim 2, wherein the wall of the shoulder (48) that is extended to totally block the hollow of the protruding part (40) forms an excess depth cavity (49) of the housing for the rolling bearing (23), this cavity receiving a part of the end of the rotation shaft emerging from the rolling bearing (23).

4. The gear motor as claimed in any one of the preceding claims, wherein the closing flange (43) comprises a wall in the form of a disk extending laterally to the stator and rotor assembly, having a peripheral rim that cooperates tightly with a complementary edge of said lateral opening, and wherein said protruding part (40) extends from this wall in the form of a disk to the interior of the internal recess.

5. The gear motor as claimed in claim 4, wherein the wall in the form of a disk and the protruding part (40) of the closing flange (4) are composed of an element made of a single piece.

6. The gear motor as claimed in claim 5, wherein said element made of a single piece is a cast metal part.

7. The gear motor as claimed in any one of the preceding claims, in which the electric motor (2) comprises a hollow support (25) bearing the magnetic elements of the rotor (20), coaxial and secured in rotation to the rotation shaft (22), said hollow support (25) capping said protruding part (40) of the casing as well as the rolling bearing (23) ensuring the guiding of the longitudinal end of the rotation shaft (20) on the side of the electric motor (2) by extending axially beyond the longitudinal end of the rotation shaft (22), on the electric motor side.

8. The gear motor as claimed in claim 7, wherein the hollow support (25) comprises a sleeve (26) ensuring the fixing of the hollow support onto the rotation shaft (22) in a position on the shaft that is intermediate between the speed-reducing mechanism (3) and the rolling bearing (23) ensuring the guiding of the longitudinal end of the rotation shaft (20) on the side of the electric motor (2).

9. The gear motor as claimed in any one of the preceding claims, in which the rotational guiding of the rotation shaft (22) is ensured only by two rolling bearings (23, 24) arranged at the two longitudinal ends of the rotation shaft (22), including said rolling bearing (23) borne by the protruding part (40) on the side of the electric motor, and another rolling bearing (24) at the other longitudinal end of the rotation shaft, on the side of the speed-reducing mechanism (3).

10. The gear motor as claimed in any one of the preceding claims, wherein the speed-reducing mechanism comprises a worm screw (30)/toothed wheel (31) system, the worm screw being secured to the rotation shaft of the rotor, the toothed wheel being secured to the output shaft (8) of the gear motor (1).

11. A motor vehicle wiper system comprising one or more windscreen wipers, a linkage mechanism for driving the windscreen wiper or wipers in a reciprocal motion, and a gear motor as claimed in any one of the preceding claims whose output shaft (8) drives the linkage mechanism.
